# EUROPÄISCHE PATENTSCHRIFT

(11) **EP 2 646 698 B1**
(45) Veröffentlichungstag und Bekanntmachung des Hinweises auf die Patenterteilung: **12.08.2015**
(21) Anmeldenummer: 10798954.3
(22) Anmeldetag: 02.12.2010
(51) Int. Cl.: F16B 45/00

(54) **RINGSCHRAUBE**
RINGSCREW
VIS À BOUCLE

(43) Veröffentlichungstag der Anmeldung: 09.10.2013
(73) Patentinhaber: Pewag Austria GmbH, 8605 Kapfenberg (AT)
(72) Erfinder: IVANIC, Ranko, A-8600 Bruck an der Mur (AT); PENGG, Ägyd, A-9020 Klagenfurt (AT)
(74) Vertreter: Geyer, Fehners & Partner
(86) Internationale Anmeldenummer: PCT/EP2010/007326
(87) Internationale Veröffentlichungsnummer: WO 2012/072095

(56) Entgegenhaltungen:
- EP-A1- 0 654 611
- EP-A2- 0 161 652
- US-A- 4 558 979
- US-A- 6 022 164

## Beschreibung

Die Erfindung bezieht sich auf eine Ringschraube mit einer Tragöse und einem Tragbolzen, der in einer Durchstecköffnung der Tragöse verdrehbar sitzt, mit einem Gewindeschaft versehen ist und einen diesen radial überragenden Bolzenkopf aufweist, der sich mit seiner Unterseite auf einer an der Tragöse ausgebildeten, um die Durchstecköffnung herum verlaufenden Anlagefläche abstützt, und mit mindestens einem mit dem Bolzenkopf in Eingriff bringbaren Sperrglied, mittels dessen in einer Sperrstellung desselben der Bolzenkopf gegenüber der Tragöse drehblockierbar ist.

Ringschrauben, bei denen der Tragbolzen in Form eines Gewindezapfens einstöckig an der Tragöse befestigt und über deren Verdrehung in eine Aufnahmebohrung eines anzukoppelnden Gegenstandes einschraubbar ist, sind bekannt und z. B. durch DIN 580 genormt. Diese bekannten Ringschrauben lassen sich zwar ohne zusätzliches Werkzeug montieren bzw. demontieren, haben allerdings den Nachteil, daß sie sich nicht in Lastrichtung ausrichten lassen und somit bei ihrer Anwendung entweder nicht ganz eingeschraubt werden können oder gar sich selbst ausschrauben. Bei solchen einteilig ausgeführten Ringschrauben ist stets die Gefahr gegeben, daß es zu einer Überlastung oder einer Lockerung des Gewindezapfens durch ein an der Tragöse wirkendes Drehmoment kommt, was zu einer Verbiegung des Gewindebolzens oder gar zu dessen Brechen führen kann.

Es sind auch Ringschrauben bekannt, bei denen der mit einem Gewindeschaft versehene Tragbolzen in einer Durchstecköffnung der Tragöse mit leichtem Spiel aufgenommen und dort verdrehbar gehaltert ist (DE 93 16 475 U1). Für mehrsträngige oder seitliche Anwendungen werden daher nur solche sogenannten "drehbaren" Ringschrauben empfohlen. Allerdings ist bei deren Montage bzw. Demontage die Verwendung eines zusätzlichen Werkzeuges (meist eines Innensechskant-Gabelschlüssels) erforderlich, das nach der Montage bzw. Demontage dann aber wieder getrennt gelagert werden muß, wobei die Gefahr besteht, daß dieser Schlüssel verlorengeht oder verlegt wird.

Eine Ringschraube der eingangs genannten Art ist aus der EP 0 654 611 A1 bekannt. Auch bei ihr ist aber die Verwendung eines eigenen Werkzeuges zum Verdrehen der Schraube beim Montieren bzw. Demontieren nötig. Neben einer getrennten Aufbewahrung des Werkzeuges wird in dieser Druckschrift aber auch die Möglichkeit beschrieben, das Werkzeug mit der Tragöse der Ringschraube so zu koppeln, daß damit über die Tragöse eine Schraubbewegung in den Tragbolzen einleitbar ist und das Werkzeug bei Nichtbenutzung, wenn es außer Eingriff mit dem Tragbolzen steht, unverlierbar an der Ringschraube anzuhängen. Dabei stehen die dort beschriebenen Werkzeuge jedoch sowohl im Eingriffszustand mit dem Tragbolzen, wie auch im Zustand außer Eingriff mit diesem deutlich auf die Außenseite der Tragöse über, weshalb bei Anwendung in einem engen Raum die Gefahr besteht, daß beim Drehen der Öse der nach außen überstehende Teil des Werkzeuges an einem im engen Raum befindlichen Gegenstand hängenbleibt und dann womöglich ein weiteres Verdrehen der Tragöse zum Einschrauben des Tragbolzens blockiert werden kann. Außerdem sind die dort gezeigten Ausführungsformen für mit der Tragöse gekuppelte Werkzeuge nicht durchgängig geschlossen, so daß aufgrund der Elastizität des für das Werkzeug verwendeten Materiales es möglich ist, die jeweils vorhandene Öffnung so weit aufzuweiten, daß das Schraubwerkzeug von der Tragöse getrennt oder auch nachträglich mit dieser verbunden werden kann. Dies beinhaltet aber auch die Gefahr, daß es infolge einer Einwirkung von außen auf das Werkzeug wegen der Elastizität des Materiales ungewollt zu einer Trennung zwischen Werkzeug und Tragöse kommen kann.

Ausgehend hiervon liegt der Erfindung die Aufgabe zugrunde, eine solche Ringschraube derart weiterzuentwickeln, daß die aufgezeigten Nachteile vermieden werden können und auch ein Einsatz der Ringschraube in einem engen Raum problemfrei möglich ist, soweit in dem Raum überhaupt die Tragöse verdreht werden kann.

Erfindungsgemäß wird dies bei einer Ringschraube der eingangs genannten Art dadurch erreicht, daß das mindestens eine Sperrglied radial neben dem Bolzenkopf an der Tragöse angebracht und dort befestigt ist, wobei es in eine Ausgangsstellung, in welcher es den Bolzenkopf völlig frei gibt, und in seine Sperrstellung, in der es den Bolzenkopf in Drehrichtung gegenüber der Tragöse blockiert, verbringbar ist.

Bei der erfindungsgemäßen Ringschraube wird zunächst für das Sperrglied kein getrenntes Werkzeug mehr eingesetzt, so daß die Gefahr eines Werkzeugverlustes nicht mehr besteht. Die Anbringung des Sperrgliedes radial neben dem Bolzenkopf und seine Befestigung dort an der Tragöse führt zu einer sehr platzsparenden Anordnung, die es ermöglicht, das Sperrglied so zu gestalten, daß es radial nach außen nicht über die äußere Umfangsfläche der Tragöse mehr übersteht, so daß bei Einsatz der erfindungsgemäßen Ringschraube deren Benutzung auch in einem engen Raum möglich ist, wenn die Tragöse aufgrund der ihr vorgegebenen Form dort überhaupt verdrehbar ist.

Die Erfindung gibt die Möglichkeit zu einer relativ platzsparenden Ausbildung der Ringschraube, insbesondere deren Tragöse, trotz des Vorhandenseins des mindestens einen Sperrgliedes zum Drehblockieren des Tragbolzens in der Tragöse. Da das Sperrglied bei der erfindungsgemäßen Ringschraube nur dazu dient, in seiner Sperrstellung diese in ihrer Drehmöglichkeit gegenüber der Tragöse zu blockieren, kann infolge seiner direkten Befestigung an der Tragöse im Bereich neben dem Bolzenkopf auch eine große und platzgreifende Bauweise für das Sperrglied vermieden werden, wie sie in den bekannten Fällen eingesetzt wird, bei denen das Sperrglied aus einem Schraubenwerkzeug besteht, das zum einen an der Schraube und zum anderen an dem Umlaufbügel der Tragöse angekoppelt werden muß.

Eine besonders bevorzugte Ausgestaltung der erfindungsgemäßen Ringschraube besteht darin, daß zwei einander hinsichtlich des Bolzenkopfes radial gegenüberliegende Sperrglieder vorgesehen sind, deren Anordnung ganz besonders bevorzugt derart gewählt ist, daß der Durchmesser des Bolzenkopfes, auf dem die Längsmittellinien dieser beiden Sperrglieder liegen, senkrecht zur Aufspannebene der Tragöse liegen. Durch die Verwendung zweier solcher Sperrglieder, die einander hinsichtlich des Kopfes des Tragbolzens radial gegenüber liegen, lassen sich auch vergleichsweise große Drehmomente, die an der Tragöse in Drehrichtung des Tragbolzens wirken, auf diesen übertragen.

Die Ausgestaltung jedes Sperrgliedes kann in jeder geeigneten Form erfolgen, die es ermöglicht, das Sperrglied erfindungsgemäß zwischen dessen Sperrstellung zum Drehblockieren des Bolzens und seiner Ausgangsstellung, in welcher kein Eingriff mit dem Bolzen stattfindet, zu bewegen bzw. zu verschieben.

In einer vorteilhaften Ausgestaltung der Erfindung kann dies dadurch geschehen, daß jedes Sperrglied als ein radial zum Bolzenkopf bewegliches Teil ausgebildet ist, das bis zum Wirkeingriff mit dem Bolzenkopf (zum Aufbau der Blockierfunktion) zu diesem hin und zur Freigabe des Bolzenkopfes von diesem weg in seine Ausgangsstellung verschoben werden kann.

Eine andere, ganz besonders vorteilhafte Ausgestaltung der Erfindung besteht jedoch darin, daß jedes Sperrglied als ein Kipphebel ausgebildet ist, der in seiner einen Kippendstellung die gewünschte Drehblockierung des Tragbolzens bewirkt, während er in einer anderen Kippendstellung den Tragbolzen freigibt.

Von besonderem Vorteil ist es ferner, wenn bei der Erfindung jedes Sperrglied in seiner Sperrstellung wie auch in seiner Ausgangsstellung jeweils arretierbar ist, wobei besonders bevorzugt dabei jedes Sperrglied in seine Sperrstellung wie auch in seine Ausgangsstellung hin federnd vorspannbar ist.

Die Blockierung des Bolzenkopfes in Drehrichtung gegenüber der Tragöse durch das Sperrglied in dessen Sperrstellung kann in jeder geeigneten Art und Weise erfolgen. Ganz besonders bevorzugt wird jedoch der Bolzenkopf in der Sperrstellung jedes Sperrgliedes durch dieses formschlüssig in Drehrichtung gegenüber der Tragöse blockiert. Der Aufbau eines solchen drehblockierenden Formschlusses durch das Sperrglied in dessen Sperrstellung ist in einer Vielzahl unterschiedlicher Ausgestaltungen erreichbar.

Ganz besonders bevorzugt wird bei der erfindungsgemäßen Ringschraube jedoch der Tragbolzen mit einem Außensechskantkopf versehen. Dabei handelt es sich nicht nur um eine ganz herkömmliche und handelsübliche Ausgestaltung von Drehbolzen, sondern auch um eine Formgebung des Bolzenkopfes, die in einfacher Weise ein formschlüssiges Zusammenwirken mit einem Sperrglied in dessen Sperrstellung ermöglicht.

Dies kann vorzugsweise dadurch bewirkt werden, daß jedes Sperrglied in seiner Sperrstellung an einer äußeren Seitenfläche des Außensechskantkopfes des Tragbolzens zumindest längs eines Linienkontaktes, besonders bevorzugt aber mittels eines flächigen Kontaktes, anliegt, wodurch infolge des Aneinanderliegens von Sperrglied und Bolzenkopf längs zumindest eines in einer ebenen Fläche liegenden Linienkontaktes eine Drehblockierung des Bolzenkopfes durch das Sperrglied ausgelöst wird.

Eine ganz besonders bevorzugte Ausgestaltung der erfindungsgemäßen Ringschraube mit der Ausbildung des Sperrgliedes als Kipphebel besteht jedoch darin, daß jedes solche Sperrglied in einer oberen Aussparung seitlich der Durchstecköffnung auf der Tragöse angebracht ist, wobei diese Aussparung senkrecht zur Mittelachse der Durchstecköffnung der Tragöse ausgerichtet . ist und das Sperrglied auf einer senkrecht zur Ausrichtung der Aussparung liegenden Schwenkachse sitzt, die ihrerseits verdrehbar von einer in der Aussparung befestigten Halteklammer gehaltert ist, wobei diese einen U-förmigen Querschnitt mit zwei über einen Mittelsteg miteinander verbundenen Seitenschenkeln umfaßt. Diese Ausgestaltung führt zu einer ganz besonders platzsparenden Ausbildung und Anordnung der Kipphebel an der Tragöse, ist wenig aufwendig, leicht montierbar, und dabei ist jeder solchermaßen ausgebildete und angeordnete Kipphebel von einer Bedienungsperson unschwer in seine beiden Kippendstellungen (Ausgangsstellung, Sperrstellung) verbringbar.

Besonders bevorzugt wird bei dieser Ausgestaltung an jedem Kipphebel auf dessen der Halteklammer zugewandten Unterseite eine Formgebung angebracht, die mit einem vom Mittelsteg der Halteklammer in Richtung zum Kipphebel hin vorspringenden Federsteg derart in Wirkverbindung steht, daß sie bei einer Kippbewegung des Kipphebels beim Überlaufen des Federsteges diesen elastisch verformt, wobei der Federsteg bei Erreichen der Kippendstellung des Kipphebels wieder seine Ausgangsform einnimmt, in welcher er über die Formgebung den Kipphebel in dessen jeweiliger Kippendstellung unter Federvorspannung verrastet. Diese konstruktive Ausführung der erfindungsgemäßen Ringschraube ist von vergleichsweise einfachem Aufbau, rasch und unschwer montierbar, mit wenig Aufwand herstellbar und bemerkenswert platzsparend, ferner einfach und rasch bedienbar und dabei insgesamt sehr wirkungsvoll sowie auch zum Übertragen größerer Drehmomente von der Ringöse auf den Tragbolzen geeignet.

Dabei ist vorzugsweise jeder Kipphebel so ausgebildet, daß er sich jeweils über einen Kipphebelschenkel in seiner Ausgangsstellung auf der Tragöse und in seiner Sperrstellung auf der Anlagefläche an der Tragöse und/oder auf einer am Tragbolzen unterhalb dessen Bolzenkopfes umlaufenden und zumindest abschnittweise dem Bolzenkopf radial überragenden Ringfläche eines Ringbundes abstützt. Besonders bevorzugt wird dabei bei jedem Kipphebel in jeder dessen Kipp-Endstellungen die der Schwenkachse abgewandte Außenfläche des sich jeweils dort abstützenden Kipphebelschenkels angenähert parallel zur Längsmittelachse des Tragbolzens liegend ausgeführt, wodurch sich eine flächige Anlage dieses Kipphebelschenkels an einer Seitenfläche des z. B. Außensechskantkopfes des Tragbolzens und damit eine sehr starke Blockierwirkung in Drehrichtung des Tragbolzens ergibt.

Bei der erfindungsgemäßen Ringschraube ist es auch besonders vorteilhaft, wenn der Tragbolzen verdrehbar in einer in der Durchstecköffnung der Tragöse aufgenommenen Hülse derart sitzt, daß er mit dieser unverlierbar verbunden ist. Auf diese Weise wird die Ringschraube drehbar und gleichzeitig als Einheit im zusammengebauten Zustand gehalten.

Die Erfindung wird nachfolgend anhand der Zeichnungen im Prinzip beispielshalber noch näher erläutert. Es zeigen:
- Fig. 1: eine perspektivische Explosionsdarstellung einer erfindungsgemäßen Ringschraube;
- Fig. 2: eine perspektivische Darstellung der Ringschraube aus Fig. 1 im montierten Zustand, wobei jedoch die Tragöse in einer durch die Längsachse des Tragbolzens verlaufenden Ebene geschnitten ist;
- Fig. 3: die erfindungsgemäße Ringschraube entsprechend den Fig. 1 und 2, in perspektivischer Darstellung im montierten Zustand und in Sperrstellung der Sperrglieder;
- Fig. 4: die Schraube aus Fig. 3, jedoch in der Ausgangsstellung der Sperrglieder;
- Fig. 5: eine vergrößerte perspektivische Darstellung einer für die Lagerung eines Sperrgliedes eingesetzten Halteklammer, und
- Fig. 6: eine vergrößerte Detaildarstellung des Halterungsbereiches der Tragöse für den Tragbolzen.

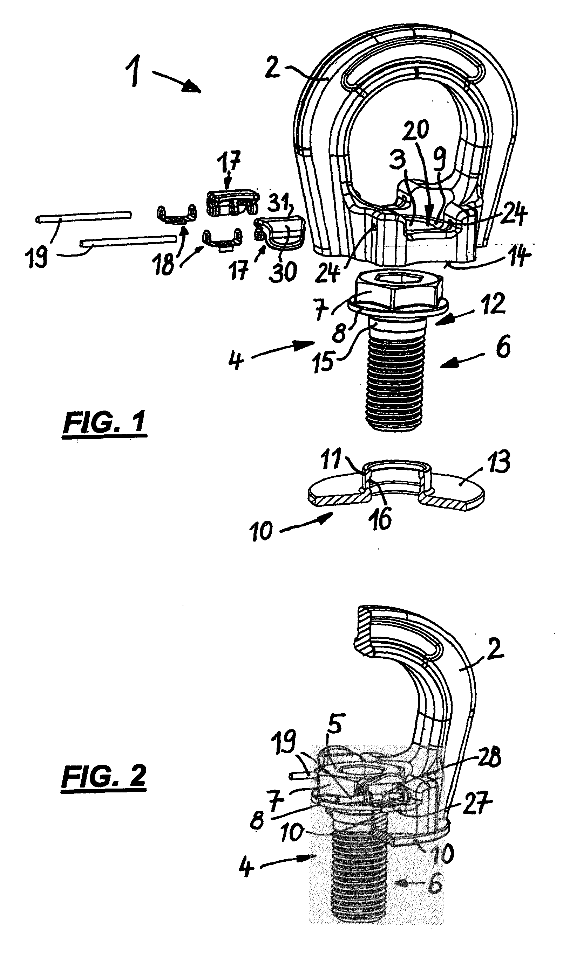

In den Figuren ist eine besonders bevorzugte Ausführungsform einer Ringschraube 1 dargestellt, die, wie am besten aus der perspektivischen Explosionsdarstellung der Fig. 1 ersichtlich, eine Tragöse 2 umfaßt, die in ihrem unteren Abschnitt mit einer Durchstecköffnung 3 zum Hindurchstecken eines Tragbolzens 4 versehen ist. Dieser weist einen Bolzenkopf 5 sowie einen Gewindeschaft 6 auf, mit dem die Ringschraube 1 an einen Gegenstand zu dessen Aufnahme angeschraubt werden kann.

Der Bolzenkopf 5 des Tragbolzens 4 ist mit einem Außensechskant 7 versehen, der auf einem umlaufenden Ringbund 8 sitzt.

Im zusammengebauten Zustand der Ringschraube 1 liegt der Tragbolzen 4 mit der Unterseite des Ringbundes 8 auf einer an der Tragöse 2 ausgebildeten, die Durchstecköffnung 3 umlaufenden ebenen Anlagefläche 9 an und stützt sich auf dieser nach unten hin ab.

Wie Fig. 2 zeigt, bei deren perspektivischer Darstellung jedoch die Tragöse 2 in einer vertikalen Mittelebene (in der auch die Mittelachse des Tragbolzens 4 liegt) geschnitten dargestellt ist, ist im zusammengebauten Zustand der Ringschraube 1 eine Ringhülse 10 von unten her über den Gewindeschaft 6 des durch die Durchstecköffnung 3 hindurchgesteckten Tragbolzens 4 aufgeschoben, und zwar so weit, daß ihr nach oben gerichteter Ringfortsatz 11 einen gewindefreien Schaftabschnitt 12 des Tragbolzens 4, direkt axial hinter dem Bolzenkopf 5, umgibt. Dieser gewindefreie Schaftabschnitt 12 weist, wie Fig. 1 erkennen läßt, einen radial leicht vergrößerten mittleren Schaftbereich 15 auf, der, bei aufgesteckter Ringhülse 10, in eine radiale Ringausnehmung 16 an der Wand der Innenöffnung der Ringhülse 10 hineinragt, wobei der Durchmesser dieser Ausnehmung 16 etwas größer als der Durchmesser des radial vergrößerten Schaftbereiches 15 ist. Da dieser radial vergrößerte Schaftbereich 15 jedoch einen Durchmesser aufweist, der zwar kleiner als der Durchmesser der Ausnehmung 16 der Innenöffnung der Ringhülse 10 ist, aber größer als der sonstige Innendurchmesser der Innenfläche der Ringhülse 10, bedeutet dies, daß bei vollständig aufgeschobener Ringhülse 10 und bei Eingriff des radial vergrößerten Schaftbereiches 15 des Tragbolzens 4 in die Ausnehmung 16 der Ringhülse 10 der Tragbolzen 4 in der Ringhülse 10 mit einem leichten radialen Spiel drehbar, aber unverlierbar aufgenommen ist. Dabei kann beim Aufschieben der Ringhülse 10 über den Gewindeschaft 6 des Tragbolzens 4 beim Erreichen des gewindefreien Schaftabschnittes 12 dann, wenn der radial vergrößerte Schaftbereich 15 in die Innenöffnung der Ringhülse 10 einläuft, mittels z. B. eines leichten Hammerschlages o. ä. das Aufschieben der Ringhülse über den radial vergrößerten Schaftbereich 15 erzwungen werden, bis dieser in die radial vergrößerte Ausnehmung 16 der Ringhülse 10 eingelaufen ist.

Wie ferner aus der Explosionsdarstellung der Fig. 1 noch entnehmbar, weist die Ringschraube 1 außerdem noch zwei Kipphebel 17, zwei Halteklammern 18 für letztere und zwei Schwenkachsen 19, jede zur verkippbaren Anordnung eines Kipphebels 17 an einer Halteklammer 18, auf.

Wie aus den Fig. 1 und 2 außerdem entnommen werden kann, ist an der Tragöse 2 in deren unterem Bereich, in dem die Durchstecköffnung 3 zur Aufnahme des Tragbolzens 4 angebracht ist, beidseits dieser Durchstecköffnung 3 jeweils eine Ausnehmung 20 von oben her am dortigen Bereich der Tragöse 2 ausgebildet. Diese beiden Ausnehmungen 20 beidseits des Bolzenkopfes 5 sind jeweils so ausgebildet, daß sie radial bezüglich der Bolzenachse um 180° versetzt vorliegen und zueinander ausgerichtet sind, d. h. ihre Ausrichtung verläuft senkrecht zur Längsmittelachse des Tragbolzens 4 und gleichzeitig auch senkrecht zur Aufspannebene der Tragöse 2, wie dies auch insbesondere der Darstellung der Fig. 1 gut entnehmbar ist.

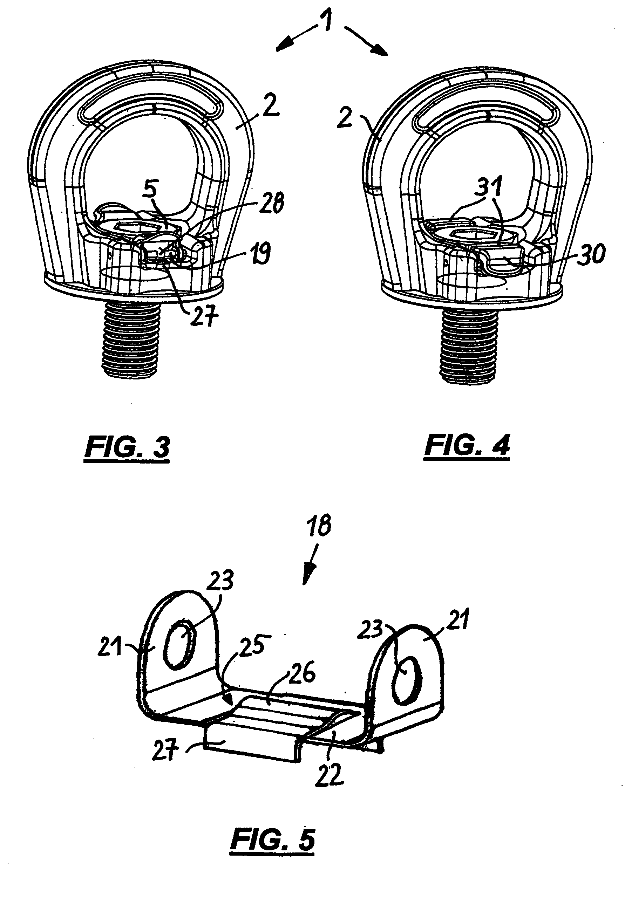

Auf den Boden jeder dieser Ausnehmungen 20 ist jeweils eine Halteklammer 18 aufgeklipst. Eine solche Halteklammer ist vergrößert in perspektivischer Darstellung in Fig. 5 gezeigt:
Jede Halteklammer 18 weist, wie aus Fig. 5 ersichtlich ist, zwei Seitenschenkel 21 auf, die parallel zueinander liegen und an ihrem einen Ende über einen Mittelsteg 22 miteinander verbunden sind.

In jedem Seitenschenkel 21 ist eine Öffnung 23 ausgebildet, wobei die beiden Öffnungen 23 der beiden Seitenschenkel 21 so zueinander ausgerichtet sind, daß durch sie jeweils eine Schwenkachse 19 (vgl. Fig. 1) hindurchgesteckt werden kann, auf der, wie die Fig. 2 und 3 zeigen, jeweils ein Kipphebel 17 verschwenkbar und seitlich sowie in Verschwenkrichtung geführt sitzt.

Die Ausnehmungen 20 haben eine Tiefe und eine Weite (parallel zur Aufspannebene der Tragöse 2) derart, daß bei in ihnen jeweils montiertem Kipphebel 17 in seiner in Fig. 4 dargestellten Ausgangsstellung, in welcher kein Wirkeingriff mit dem Bolzenkopf 5 des Tragbolzens 4 vorliegt, die oben liegende Fläche des Kipphebels 17 ungefähr auf dem dort vorliegenden, seitlich der Ausnehmung 20 gegebenen Oberflächenniveau der Tragöse 2 liegt. Die Weite der Ausnehmung 20 ist so gewählt, daß in ihr jeweils die zugeordnete Halteklammer 18 und der entsprechende Kipphebel 17 mit etwas seitlichem Spiel montiert werden können.

Die Schwenkachse 19 für jede Ausnehmung 20 ist aber deutlich länger als die seitliche Weite der betreffenden Ausnehmung 20, wobei die Schwenkachse 19 beidseits der Ausnehmung 20 in eine dort jeweils seitlich angebrachte Lageröffnung 24 hineinragt. Dabei kann der jeweilige Kipphebel 17 entweder verschwenkbar auf der zugeordneten Schwenkachse 19 sitzen und diese in den Lageröffnungen 24 unverdrehbar mit festem Sitz angebracht sein. Es kann der Kipphebel 17 aber auch fest auf der Schwenkachse 19 angebracht und mit dieser in den Öffnungen 23 in den Seitenschenkeln 21 der Halteklammer 18 sowie in den Lageröffnungen 24 verschwenkbar vorgesehen sein.

Wie Fig. 5 zeigt, ist im mittleren Bereich des Mittelsteges 22 der Halteklammer 18 ein Federblech 25 vorgesehen, das, etwas seitlich zu der Lage der Öffnungen 23 versetzt, einen nach oben herausragenden und gewölbten Federsteg 26 bildet und an seinem der Außenseite der Tragöse 2 zugewandten Endbereich 27 um etwa 90° zum Mittelsteg 22 der Halteklammer 18 umgebogen ist. Dieser umgebogene Endbereich 27 des Federbleches 25 liegt im montierten Zustand am Außenrand der Ausnehmung 20 an, wie dies die Darstellungen der Fig. 2, 3 und 6 erkennen lassen. Zur sonstigen Form der Ausgestaltung des Federbleches 25 bei dem in den Figuren gezeigten Ausführungsbeispiel wird auf die zeichnerische Darstellung der Fig. 5 als erfindungswesentlich ausdrücklich verwiesen.

Das Federblech 25 sitzt dabei so am Mittelsteg 22 der Halteklammer 18, daß bei einer Druckeinwirkung von oben her auf den Federsteg 26 dieser so deformiert wird, daß der Krümmungsradius seiner Auswölbung größer und die Auswölbung damit flacher wird, wobei er so an der Halteklammer 18 angebracht ist, daß er eine bei seinem Flachdrücken auftretende Längenänderung relativ zum Mittelsteg 22 der Halteklammer 18 ausgleichen kann.

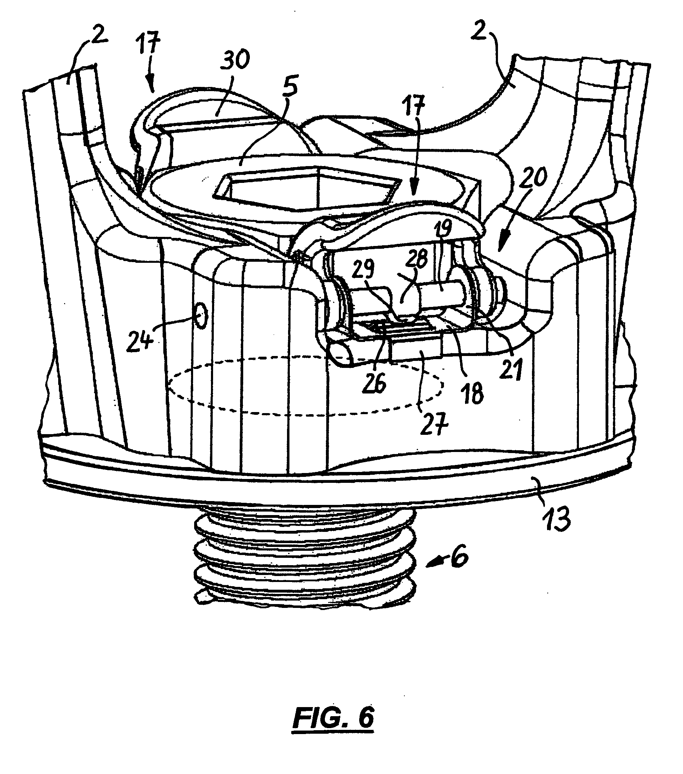

An der dem Mittelsteg 22 der Halteklammer 18 zugewandten Unterseite jedes Kipphebels 17 ist dieser in seinem mittleren Bereich, der im montierten Zustand der Lage des Federbleches 22 in der Halteklammer 18 entspricht, mit einer Formgebung 28 versehen, wie dies besonders deutlich aus Fig. 6 hervorgeht, welche den unteren mittleren Bereich der Tragöse 2 mit montiertem Tragbolzen 4 in vergrößerter Darstellung zeigt.

Die Formgebung 28 umgreift dabei, wie aus Fig. 6 ersichtlich, die Schwenkachse 19 und wird beim Verkippen des Kipphebels 17 um die Schwenkachse 19 verdreht (entweder relativ zu dieser oder mit dieser zusammen um deren Mittelachse).

Dabei weist die Formgebung 28 einen Wirkvorsprung 29 auf, der örtlich radial vorsteht und beim Verkippen des Kipphebels 17 mit dem Federsteg 26 des Federbleches 25 in Wirkkontakt und Wirkeingriff tritt. Beim Verkippen des Kipphebels 17 läuft der Wirkvorsprung 29 dabei von der einen Seite des Mittelsteges 22 der Halteklammer 18 aus kommend auf den gewölbten Federsteg 26 auf und über diesen hinweg, wobei der Federsteg 26 nach unten gedrückt und dabei elastisch deformiert wird. Dabei drückt er mit seiner elastischen Rückstellkraft gegen den Wirkvorsprung 29. Sobald dieser über die Mitte des Federsteges 26 hinweggeführt wurde, drückt der Federsteg 26 mit seiner elastischen Rückstellkraft gegen eine Seitenflanke des Wirkvorsprungs 29 mit der Folge, daß dieser in Kipprichtung federnd vorgespannt ist und in die entsprechende Kippendstellung hin gedrückt wird. Dies gilt für beide Kipprichtungen des Kipphebels 17, wobei durch die Gestaltung des Wirkvorsprungs 29 sichergestellt werden kann, daß dieser in jeder der beiden Kippendstellungen des Kipphebels 17 noch von einer gewissen elastischen Rückstellkraft des Federsteges 26 beaufschlagt und damit in dieser Kippendstellung unter Federvorspannung gehalten wird.

Wie die Darstellung der Fig. 1 weiterhin zeigt, besteht jeder Kipphebel 17 aus einem ersten Kipphebelschenkel 30 und einem zweiten, unter einem Winkel zu diesem von etwa 90° geneigt angebrachten Kipphebelschenkel 31.

In der Ausgangsstellung des Kipphebels 17, in welcher dieser mit dem Bolzenkopf 5 des Tragbolzens 4 nicht in Wirkeingriff steht und letzterer frei in der Durchstecköffnung 3 der Tragöse 2 verdrehbar ist, welche Stellung in Fig. 4 gezeigt ist, ist jeder Kipphebel 17 so verkippt, daß er in seine äußere Kipphebelendstellung geklappt ist, in welcher er über diesen ersten Kipphebelschenkel 30 sich an bzw. in der Ausnehmung 20 abstützt. In dieser Stellung ist der zweite Kipphebelschenkel 31 dann nach oben gekippt, wobei seine Außenfläche senkrecht zur Längsmittelachse der Durchstecköffnung 3 liegt.

Ist der Kipphebel 17 jedoch in seine Sperrstellung verkippt, wie diese in den Fig. 2 und 3 sowie insbesondere in der Fig. 6 dargestellt ist, dann stützt er sich in dieser Kipphebelendstellung auf den zweiten Kipphebelschenkel 31 ab, der dann, wie diese Figuren zeigen, mit seiner Außenseite gegen eine zugewandte Seitenfläche des Außensechskants 7 des Bolzenkopfes 5 anliegt und in dieser Kippendstellung unter Federvorspannung durch den Federsteg 26, der gegen den Wirkvorsprung 29 drückt, gehalten wird.

In dieser Sperrstellung ist dann eine Verdrehung des Tragbolzens 4 nicht mehr möglich, weil die Außenkontur des Außensechskantes 7 des Bolzenkopfes 5 durch das beidseitige Anliegen der Außenflächen der zweiten Kipphebelschenkel 31 der beiden Kipphebel 17 den Tragbolzenkopf 5 gegenüber der Tragöse 2 in Drehrichtung blockiert.

In dieser Blockierstellung kann dann die Bedienungsperson durch Erfassen der Tragöse 2 und Drehen derselben dieses Drehmoment über die als Kipphebel 17 ausgebildeten Sperrglieder an den Kipphebelkopf 5 und damit an den Gewindeschaft 6 des Tragbolzens 4 übertragen, so daß damit durch Verdrehen der Tragöse 2 ein Einschrauben des Gewindeschaftes 6 in einen anzuschließenden Körper möglich ist. Um dabei stets auch eine gute Ausrichtung des Tragbolzens 4 bzw. dessen Gewindeschaft 6 in Lastrichtung zu ermöglichen, sitzt der Tragbolzen 4 in der Durchstecköffnung 3 mit einem kleinen Spiel und ist, sobald die Kipphebel 17 in ihre andere Kipphebelendstellung, nämlich die Ausgangsstellung, zurückgekippt sind, frei relativ zur Tragöse 2 verdrehbar.

Die Kipphebel 17 können dabei in jeder geeigneten Form hergestellt werden, sei es als Blechformteile, insbesondere aber auch als Gußteile oder in jeder anderen geeigneten Herstellungsweise.

Dabei ist es überhaupt kein Problem, die Kipphebel 17 so auszubilden und anzuordnen, daß sie in jeder ihrer Kippendstellungen nicht über die vom Außenumfang der Abschlußleiste 13 der Ringhülse 10 umschriebene Grundfläche radial überstehen, so daß auch auf engstem Raum ein problemloses Verdrehen der Tragscheibe 2, auch in Sperrstellung der Kipphebel 17, möglich ist.

Die Formgebung des ersten und des zweiten Kipphebelschenkels 30 bzw. 31 jedes Kipphebels 17 ist so vorgenommen, daß in jeder Kippendstellung der betreffende Kipphebelschenkel 30 bzw. 31, über den sich der Kipphebel in der betreffenden Endstellung gegenüber der Tragöse 2 abstützt, etwa senkrecht zur betreffenden Abstützfläche liegt, so daß eine Abstützung unter dem günstigen Abstützwinkel von etwa 90° erreicht wird. Lediglich der erste Kipphebel 30 ist an seinem frei vorstehenden Endbereich etwas zu seiner sonstigen Fläche nach außen hin gewölbt, damit er in der Ausgangsstellung (vgl. Fig. 4) leicht von der Bedienungsperson mit ihren Fingern von außen her untergriffen und hochgeklappt werden kann.

Durch die oben beschriebene Ausgestaltung der Ringschraube ist ein werkzeugloses Einschrauben bzw. Ausschrauben der Ringschraube relativ zu einem aufzunehmenden Gegenstand ermöglicht, wobei nach Anschrauben des Gegenstandes und Verkippen der Kipphebel in deren Ausgangsstellung ein freies Verdrehen des an dem Tragbolzen 4 angeordneten Gegenstandes relativ zur Tragöse 2 erfolgen kann.

Die Formgebung der beim Verkippen der Kipphebel 17 zusammenwirkenden Elemente Formgebung 28 am Kipphebel 17 mit Wirkvorsprung 29 und Federblech 25 mit der Formgebung des Federsteges 26 können nicht nur so gewählt werden, daß in jeder Kippendstellung eines Kipphebels 17 eine vorgegebene Größe der ihn in seine Kippendstellung drückenden Federkraft durch den Federsteg 26 erreicht wird. Die Formgebung kann weiterhin auch noch so vorgenommen werden, daß eine bestimmte, vorgegebene Größe der Auslenkung eines Kipphebels 17 aus jeder seiner Endstellungen heraus erst überwunden werden muß, bevor die elastische Rückstellkraft des Federsteges 26 den soweit verkippten Kipphebel 17 dann unter Vorspannung in Richtung auf seine andere Kippendstellung hin drückt und auslenkt, um zu vermeiden, daß der betreffende Kipphebel 17 aus einer Kippendstellung versehentlich und unabsichtlich verstellt werden könnte.

Bei der vorstehend beschriebenen Ringschraube ist eine besonders einfache und zeitsparende Handhabung für den Anwender erreichbar, weil kein zusätzliches Werkzeug zum Ein- und Ausschrauben des Gewindebolzens 6 mehr erforderlich ist.

## Patentansprüche

1. Ringschraube (1) mit einer Tragöse (2) und einem Tragbolzen (4), der in einer Durchstecköffnung (3) der Tragöse (2) verdrehbar sitzt, mit einem Gewindeschaft (6) versehen ist und einen diesen radial überragenden Bolzenkopf (5) aufweist, der sich mit seiner Unterseite auf einer an der Tragöse (2) ausgebildeten, um die Durchstecköffnung (3) herum verlaufenden Anlagefläche (9) abstützt, und mit mindestens einem mit dem Bolzenkopf (5) in Eingriff bringbaren Sperrglied (17), mittels dessen in einer Sperrstellung desselben der Bolzenkopf (5) gegenüber der Tragöse (2) drehblockierbar ist, ***dadurch gekennzeichnet,* daß** das mindestens eine Sperrglied (17) radial neben dem Bolzenkopf (5) an der Tragöse (2) angebracht und dort befestigt ist, wobei es in eine Ausgangsstellung, in der es mit dem Bolzenkopf (5) nicht in Eingriff steht, wie auch in seine den Tragbolzen (4) relativ zur Tragöse (2) drehblockierende Sperrstellung verbringbar ist.

2. Ringschraube nach Anspruch 1, **dadurch gekennzeichnet, daß** zwei einander hinsichtlich des Bolzenkopfes (5) radial gegenüberliegende Sperrglieder (17) vorgesehen sind.

3. Ringschraube nach Anspruch 1 oder Anspruch 2, **dadurch gekennzeichnet, daß** jedes Sperrglied (17) radial zum Bolzenkopf (5) beweglich ausgebildet ist.

4. Ringschraube nach Anspruch 1 oder Anspruch 2, **dadurch gekennzeichnet, daß** jedes Sperrglied als ein Kipphebel (17) ausgebildet ist.

5. Ringschraube nach einem der Ansprüche 1 bis 4, **dadurch gekennzeichnet, daß** das Sperrglied (17) in seiner Sperrstellung und in seiner Ausgangsstellung arretierbar ist.

6. Ringschraube nach Anspruch 5, **dadurch gekennzeichnet, daß** jedes Sperrglied (17) in seine Sperrstellung und in seine Ausgangsstellung hin federnd vorgespannt ist.

7. Ringschraube (1) nach einem der Ansprüche 1 bis 6, **dadurch gekennzeichnet, daß** der Bolzenkopf (5) in der Sperrstellung jedes Sperrgliedes (17) durch dieses formschlüssig in Drehrichtung gegenüber der Tragöse (2) blockiert ist.

8. Ringschraube (1) nach einem der Ansprüche 1 bis 7, **dadurch gekennzeichnet, daß** der Tragbolzen (4) mit einem Außensechskant (7) versehen ist.

9. Ringschraube (1) nach Anspruch 8, **dadurch gekennzeichnet, daß** jedes Sperrglied (17) in seiner Sperrstellung an einer äußeren Seitenfläche des Außensechskants (7) des Bolzenkopfes (5) zumindest längs eines Linienkontaktes anliegt.

10. Ringschraube (1) nach Anspruch 4 oder nach Anspruch 4 in Verbindung mit einem der Ansprüche 5, 6 oder 8, **dadurch gekennzeichnet, daß** jedes als Kipphebel (17) ausgebildete Sperrglied in einer oberen Aussparung (20) seitlich der Durchstecköffnung (3) an der Tragöse (2) sitzt, wobei die Aussparung (20) senkrecht zur Mittelachse der Durchstecköffnung (3) ausgerichtet ist und das Sperrglied auf einer senkrecht zur Ausrichtung der Aussparung (20) liegenden Schwenkachse (19) sitzt, die ihrerseits verdrehbar von einer in der Aussparung (20) befestigten Halteklammer (18) gehaltert ist, die einen U-förmigen Querschnitt mit zwei über einen Mittelsteg (22) miteinander verbundenen Seitenschenkeln (21) umfaßt.

11. Ringschraube (1) nach Anspruch 10, **dadurch gekennzeichnet, daß** jeder Kipphebel (17) auf seiner der Halteklammer (18) zugewandten Unterseite mit einer Formgebung (28) versehen ist, die mit einem vom Mittelsteg (22) der Halteklammer (18) vorspringenden Federsteg (26) derart in Wirkverbindung steht, daß sie bei einer Kippbewegung des Kipphebels (17) beim Überlaufen des Federsteges (26) diesen elastisch verformt, wobei der Federsteg (26) bei Erreichen der Kippendstellung wieder seine Ausgangsform einnimmt, in welcher er über die Formgebung (28) den Kipphebel (17) in der jeweiligen Kippendstellung verrastet.

12. Ringschraube (1) nach Anspruch 10 oder 11, **dadurch gekennzeichnet, daß** jeder Kipphebel (17) sich über einen ersten Kipphebelschenkel (30) in seiner Ausgangsstellung an der Tragöse (2) und in seiner Sperrstellung über einen zweiten Kipphebelschenkel (31) auf einer am Tragbolzen (4) unterhalb dessen Bolzenkopfes (5) umlaufenden und zumindest abschnittsweise den Bolzenkopf (5) radial überragende Oberfläche eines den Bolzenkopf (5) tragenden Ringbundes (8) abstützt.

13. Ringschraube (1) nach Anspruch 12, **dadurch gekennzeichnet, daß** bei jedem Kipphebel (17) in jeder seiner Kippendstellungen die der Schwenkachse (19) abgewandte Außenfläche seines sich jeweils dort abstützenden Kipphebelschenkels (30, 31) angenähert parallel zur Längsmittelachse des Tragbolzens (4) liegt.

14. Ringschraube (1) nach einem der Ansprüche 1 bis 12, **dadurch gekennzeichnet, daß** der Tragbolzen (4) verdrehbar in einer in der Durchstecköffnung (3) aufgenommenen Hülse (10) sitzt, mit der er unverlierbar verbunden ist.

## Claims

1. Ringscrew (1) with a lifting eye (2) and a supporting bolt (4) which is seated rotatably in an insertion opening (3) of the lifting eye (2), provided a threaded shaft (6) and which comprises a bolt head (5) protruding radially thereover supported by its underside on a bearing surface (9) embodied on the lifting eye (2) and encircling the insertion opening (3) and with at least one locking member (17) which can be brought into engagement with the bolt head (5) by means of which, in a locking position of the same, the bolt head (5) can be rotationally blocked in respect of the lifting eye (2), ***characterised in that*** the at least one locking member (17) is attached radially next to the bolt head (5) on the lifting eye (2) and is secured there, wherein it can be brought into a starting position in which it is not engaged with the bolt head (5) and also into its locking position rotationally blocking the supporting bolt (4) relative to the lifting eye (2).

2. Ringscrew according to claim 1, **characterised in that** two radial locking members (17) lying opposite one another in respect of the bolt head (5) are provided.

3. Ringscrew according to claim 1 or claim 2, **characterised in that** each locking member (17) is embodied movable radially relative to the bolt head (5).

4. Ringscrew according to claim 1 or claim 2, **characterised in that** each locking member is embodied as a rocker arm (17).

5. Ringscrew according to any one of claims 1 to 4, **characterised in that** the locking member (17) can be locked in its locking position and in its starting position.

6. Ringscrew according to claim 5, **characterised in that** each locking member (17) is pretensioned in spring-loading manner into its locking position and into its starting position.

7. Ringscrew (1) according to any one of claims 1 to 6, **characterised in that** the bolt head (5) is blocked in positive-locking manner in the locking position of each locking member (17) by said locking member in the direction of rotation in respect of the lifting eye (2).

8. Ringscrew (1) according to any one of claims 1 to 7, **characterised in that** the supporting bolt (4) is provided with an external hexagon (7).

9. Ringscrew (1) according to claim 8, **characterised in that**, in its locking position, each locking member (17) lies against an outer side surface of the external hexagon (7) of the bolt head (5) at least along a linear contact.

10. Ringscrew (1) according to claim 4 or according to claim 4 in conjunction with any one of claims 5, 6 or 8, **characterised in that** each locking member embodied as a rocker arm (17) sits in an upper recess (20) to the side of the insertion opening (3) on the lifting eye (2), wherein the recess (20) is aligned perpendicular to the centre axis of the insertion opening (3) and the locking member sits a on a pivot axis (19) lying perpendicular to the alignment of the recess, which is in turn held rotatably by a retaining clamp (18) secured in the recess (20) said retaining clamp comprising a U-shaped cross section with two side legs (21) connected to one another via a centre bar (22).

11. Ringscrew (1) according to claim 10, **characterised in that** each rocker arm (17) is provided on its underside facing the retaining clamp (18) with a shaping (28) which is in active connection with a spring bar (26) protruding from the centre bar (22) of the retaining clamp (18) such that, during a tilting movement of the rocker arm (17), it elastically deforms the spring bar when said spring bar is overrun, wherein, when it reaches the tilt-end position, the spring bar (26) resumes it starting shape in which it locks the rocker arm (17) via the shaping (28) in the respective tilt-end position.

12. Ringscrew (1) according to claim 10 or 11, **characterised in that** each rocker arm (17) is supported by a first rocker-arm leg (30) in its starting position on the lifting eye (2) and in its locking position by a second rocker-arm leg (31) on a surface of a coiled bundle (8) encircling the supporting bolt (4) below its bolt head (5) and at least in sections radially protruding over the bolt head (5).

13. Ringscrew (1) according to claim 12, **characterised in that**, for each rocker arm (17) in each of its tilt-end positions, the outer surface of its respective rocker arm leg (30, 31) supported there facing away from the pivot axis (19) lies approximately parallel to the longitudinal centre axis of the supporting bolt (4).

14. Ringscrew (1) according to any one of claims 1 to 12, **characterised in that** the supporting bolt (4) is seated rotatably in a sleeve (10) accommodated in the insertion opening (3) to which it is captively connected.

## Revendications

1. Vis à anneau (1) comportant un anneau de levage (2) et un boulon de levage (4), qui est logé de manière rotative dans un orifice de passage (3) de l'anneau de levage (2), est muni d'une tige filetée (6) et comporte une tête de boulon (5), qui est radialement saillante sur ladite tige et qui prend appui avec sa face inférieure sur une surface d'appui (9) réalisée sur l'anneau de levage (2) et s'étendant autour de l'orifice de passage (3), et comportant au moins un organe de blocage (17), qui peut être amené en prise avec la tête de boulon (5) et lequel permet, dans une position de blocage de celui-ci, de bloquer la rotation de la tête de boulon (5) par rapport à l'anneau de levage (2), **caractérisée en ce que** ledit au moins un organe de blocage (17) est disposé radialement à côté de la tête de boulon (5) sur l'anneau de levage (2) et y est fixé, ledit organe de blocage pouvant être amené dans une position de départ, dans laquelle il n'est pas en prise avec la tête de boulon (5), de même que dans sa position de blocage bloquant la rotation du boulon de levage (4) par rapport à l'anneau de levage (2).

2. Vis à anneau selon la revendication 1, **caractérisée en ce qu'**il est prévu deux organes de blocage (17) radialement face à face par rapport à la tête de boulon (5).

3. Vis à anneau selon la revendication 1 ou 2, **caractérisée en ce que** chaque organe de blocage (17) est réalisé de manière mobile radialement par rapport à la tête de boulon (5).

4. Vis à anneau selon la revendication 1 ou la revendication 2, **caractérisée en ce que** chaque organe de blocage est réalisé sous la forme d'un levier à bascule (17).

5. Vis à anneau selon l'une quelconque des revendications 1 à 4, **caractérisée en ce que** l'organe de blocage (17) peut être immobilisé dans sa position de blocage et dans sa position de départ.

6. Vis à anneau selon la revendication 5, **caractérisée en ce que** chaque organe de blocage (17) est précontraint par ressort vers sa position de blocage et vers sa position de départ.

7. Vis à anneau (1) selon l'une quelconque des revendications 1 à 6, **caractérisée en ce que** la tête de boulon (5), dans la position de blocage de chaque organe de blocage (17), est bloquée par ce dernier par conjugaison de forme dans le sens de rotation par rapport à l'anneau de levage (2).

8. Vis à anneau (1) selon l'une quelconque des revendications 1 à 7, **caractérisée en ce que** le boulon de levage (4) est muni d'un six-pans extérieur (7).

9. Vis à anneau (1) selon la revendication 8, **caractérisée en ce que** chaque organe de blocage (17) dans sa position de blocage, est en appui, au moins le long d'une ligne de contact, contre une face latérale extérieure du six-pans extérieur (7) de la tête de boulon (5).

10. Vis à anneau (1) selon la revendication 4 ou selon la revendication 4 en liaison avec une des revendications 5, 6 ou 8, **caractérisée en ce que** chaque organe de blocage réalisé sous la forme d'un levier à bascule (17) est logé sur l'anneau de levage (2) dans un évidement (20) supérieur latéralement à l'orifice de passage (3), ledit évidement (20) étant orienté perpendiculairement à l'axe médian de l'orifice de passage (3) et l'organe de blocage étant logé sur un axe de pivotement (19), qui est disposé perpendiculairement à l'orientation de l'évidement (20) et qui, pour sa part, est maintenu de manière rotative par une pince de retenue (18), qui est fixée dans l'évidement (20) et qui comporte une section transversale en forme de U avec deux branches latérales (21) reliées entre elles par une branche centrale (22).

11. Vis à anneau (1) selon la revendication 10, **caractérisée en ce que** chaque levier à bascule (17), sur sa face inférieure orientée vers la pince de retenue (18), est muni d'un formage (28) qui est relié de manière active à une barrette ressort (26), saillante sur la branche centrale (22) de la pince de retenue (18), de telle sorte que pendant un mouvement de basculement du levier à bascule (17) lors du passage sur la barrette ressort (26) ledit formage déforme élastiquement cette dernière, ladite barrette ressort (26), lorsque la position finale de basculement est atteinte, reprenant sa forme initiale, dans laquelle elle bloque, par l'intermédiaire du formage (28), le levier à bascule (17) dans la position finale de basculement respective.

12. Vis à anneau (1) selon la revendication 10 ou 11, **caractérisée en ce que** chaque levier à bascule (17), dans sa position de départ, par l'intermédiaire de sa première branche (30) prend appui sur l'anneau de levage (2) et, dans sa position de blocage, par l'intermédiaire de sa deuxième branche (31) prend appui sur une surface d'un épaulement annulaire (8) portant la tête de boulon (5), laquelle surface entoure le boulon de levage (4) en dessous de sa tête de boulon (5) et formant une saillie radiale au moins par zones sur la tête de boulon (5).

13. Vis à anneau (1) selon la revendication 12, **caractérisée en ce que** dans chaque levier à bascule (17), quelles que soient ses positions finales de basculement, la face extérieure, détournée de l'axe de pivotement (19), de sa branche (30, 31) prenant respectivement appui à cet emplacement, est disposée à peu près parallèlement à l'axe médian longitudinal du boulon de levage (4).

14. Vis à anneau (1) selon l'une quelconque des revendications 1 à 12, **caractérisée en ce que** le boulon de levage (4) est disposé de manière rotative dans une gaine (10), qui est logée dans l'orifice de passage (3) et à laquelle ledit boulon de levage est relié de manière imperdable.
